# EUROPEAN PATENT SPECIFICATION

(11) **EP 2 525 545 B1**
(45) Date of publication and mention of the grant of the patent: **30.03.2016**
(21) Application number: 11824308.8
(22) Date of filing: 20.09.2011
(51) Int. Cl.: H04L 29/06, H04L 12/26

(54) **METHOD AND DEVICE FOR PATTERN MATCHING IN A DEEP PACKET INSPECTION (DPI) DEVICE**
VERFAHREN UND VORRICHTUNG ZUR MUSTERÜBEREINSTIMMUNG IN EINER TIEFENPAKETINSPEKTIONS (DPI)-VORRICHTUNG
PROCÉDÉ ET DISPOSITIF POUR UNE MISE EN CORRESPONDANCE DE MOTIFS DANS UN DISPOSITIF D'INSPECTION APPROFONDIE DE PAQUETS (DPI)

(30) Priority: 02.04.2011 CN 201110083536
(43) Date of publication of application: 21.11.2012
(73) Proprietor: Huawei Technologies Co., Ltd., Longgang District Shenzhen, Guangdong 518129 (CN)
(72) Inventor: QIU, Jingzhong, Shenzhen, Guangdong 518129 (CN); BUCHNICK, Erez, Zoran 42823 (IL)
(74) Representative: Isarpatent
(86) International application number: PCT/CN2011/079865
(87) International publication number: WO 2012/136051

(56) References cited:
- CN-A- 101 030 947
- CN-A- 101 770 473
- CN-A- 101 841 456
- CN-A- 101 848 222
- CN-A- 101 908 985
- CN-A- 102 163 221
- US-A1- 2009 219 813
- GERALD TRIPP: "A Parallel String Matching Engine for use in High Speed Network Intrusion Detection Systems", JOURNAL IN COMPUTER VIROLOGY, SPRINGER-VERLAG, PA, vol. 2, no. 1, 1 June 2006 (2006-06-01), pages 21-34, XP019411430, ISSN: 1772-9904, DOI: 10.1007/S11416-006-0010-4
- HUTCHINGS B L ET AL: "Assisting network intrusion detection with reconfigurable hardware", FIELD-PROGRAMMABLE CUSTOM COMPUTING MACHINES, 2002. PROCEEDINGS. 10TH ANNUAL IEEE SYMPOSIUM ON 22-24 APRIL 2002, PISCATAWAY, NJ, USA,IEEE, 22 April 2002 (2002-04-22), pages 111-120, XP010619838, ISBN: 978-0-7695-1801-5
- JUNGHAK KIM ET AL: "Programmable architecture for NFA-based string matching", INFORMATION AND COMMUNICATION TECHNOLOGY CONVERGENCE (ICTC), 2010 INTERNATIONAL CONFERENCE ON, IEEE, PISCATAWAY, NJ, USA, 17 November 2010 (2010-11-17), pages 484-489, XP031839945, DOI: 10.1109/ICTC.2010.5674790 ISBN: 978-1-4244-9806-2

## Description

### FIELD OF THE INVENTION

The invention relates to the communications technology field and relates to a method and an apparatus for mode matching.

### BACKGROUND OF THE INVENTION

At present, broadband services bring carriers opportunities while also challenges. Carriers face a series of new topics such as bandwidth management, content charging, and information security. With the increasing peer-to-peer (P2P, Peer-to-Peer) service traffic, the deep packet inspection (DPI, Deep Packet Inspection) technology is considered as an effective method for multi-service management and control.

The characteristic word-based identification technology of the DPI technology is the most basic and widely applied. Different applications use different protocols and different protocols use different special fingerprints. The fingerprints may be specific ports, character strings, or bit sequence. The characteristic word-based identification technology determines the applications borne over the service traffic based on the fingerprint information in the data packets. According to different detection modes, the characteristic word-based identification technology is classified into fixed-location characteristic word matching, variable-location characteristic word matching, and status characteristic work matching.

The DPI can identify various characteristic words from packets in various formats. The identification is implemented using the mode matching technology, for example, character string matching. That is, the target character string is matched from the packets. The mode matching technology is simple and easy to expand. Therefore, the mode matching plays an important role in the DPI technology. The mode matching supports three matching algorithms:

Single-mode matching: A scanning for the target string can match only a mode string. In single-matching algorithm, to match multiple mode strings, the corresponding number of scanning times must be performed.

Multi-mode matching: A scanning for the target string can match multiple mode strings. Compared with the single-mode matching algorithm, the multi-mode matching algorithm achieves multiple mode string matching in a traversal, which greatly improves the matching efficiency.

Regular expression matching: The regular expression describes a character string matching mode. The regular expression can be used to check whether certain substrings exist in a character string. Compared with the single-mode and multi-mode matching algorithms, the regular expression matching algorithm provides powerful character string retrieval and matching capabilities.

The mode matching is used to retrieve and match the text information. The existing matching mechanism cannot effectively match the text information that carries logical relationship information. For example, protocol A has a character string AlA2A3A4+B1B2B3B4=3010. A1, A2, A3, A4, B1, B2, B3, and B4 are integers from 1 to 9. The character string of protocol A must meet the logical condition A1A2A3A4+B1B2B3B4=3010. For example, when the value of A1A2A3A4 is 1234 and that of B1B2B3B4 is 1776, A1A2A3A4+B1B2B3B4=(1234+1775)=3010. Therefore, the character string meets both the characteristic of protocol A and the logical condition. When the value of A1A2A3A4 is 1235 and that of B1B2B3B4 is 1777, A1A2A3A4+B1B2B3B4=(1235+1777)=3012. Therefore, the character string does not meet the characteristic of protocol A. The existing mode matching mechanism, however, considers that the character string in both situations meets the characteristic of protocol A. The existing mode matching mechanism cannot effectively identify the text information with logical relationship information. The matching may be faulty.

GERALD TRIPP: "A Parallel String Matching Engine for use in High Speed Network Intrusion Detection Systems", JOURNAL IN COMPUTER VIROLOGY, SPRINGER-VERLAG, PA, vol. 2, no. 1, 1 June 2006, pages 21-34 discloses a method to perform string matching in parallel across multiple finite state machines by splitting the search strings into multiple interleaved substrings and by combinning the output from the individual finite statemachines in an appropriate way.

### SUMMARY OF THE INVENTION

The embodiments of the present invention provide a method and an apparatus for mode matching, which improves the capability for matching the text information that carries logical relationship information.

To resolve the preceding technical issues, the invention provides the following technical solutions:

A method for mode matching which is used to identify various characteristic words from packets in various formats, where the method is applied to implement Deep Packet Inspection, DPI, as claimed in claim 1.

An apparatus for mode matching which is used to identify various characteristic words from packets in various formats, where the method is applied to implement Deep Packet Inspection, DPI, as claimed in claim 9.

Preferred embodiments are covered by the dependent claims.

It can be seen from the above that, in the embodiment of the present invention, at least one logical matching field that is used to match the logical matching relationship is introduced in the mode matching string, and the target character string is matched by using the mode matching string that includes the logical matching field and the matching is performed on the logical relationship included in the target character string by using the logical matching field in the mode matching string. Such mechanism enables the mode matching to support accurate retrieval and matching of text information that includes logical relationship information, which improves the capability of matching the text information that carries logical relationship information and extends applications of mode matching.

### BRIEF DESCRIPTION OF THE DRAWINGS

To clearly describe the embodiments,or technical solutions of the present invention, figures are used to describe to simply introduce the embodiments or technical solutions. Obviously, the figures in the description are only a part of embodiments of the present invention. For those skilled in the art, without paying any creative work, those skilled can obtain other figures based on the figures provided in the present invention whose scope is defined by the appended claims.
Figure 1 shows a flowchart of a mode matching method provided in the present invention.
Figure 2 shows a flowchart of another mode matching method provided in the present invention.
Figure 3 shows a flowchart of another mode matching method provided in the present invention.
Figure 4-a shows a flowchart of a mode matching string provided in the present invention.

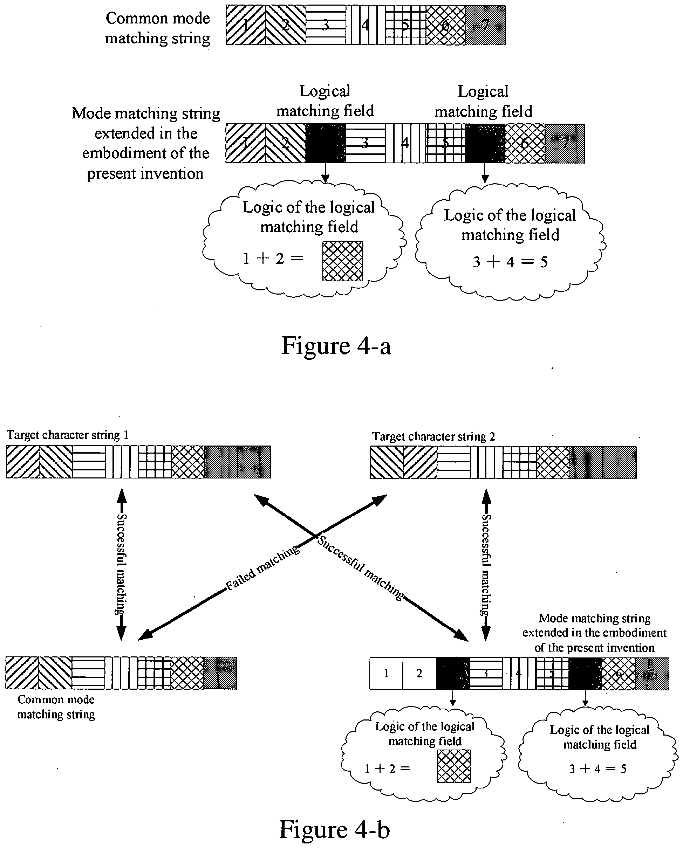

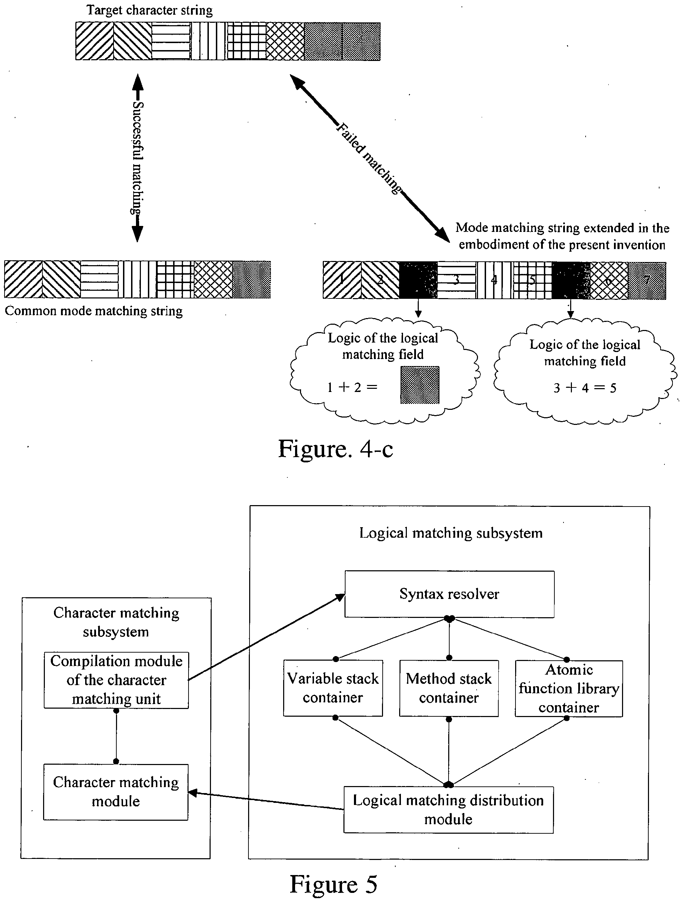

Figure 4-b shows a flowchart of another mode matching string provided in the present invention.
Figure 4-c shows a flowchart of another mode matching string provided in the present invention.
Figure 5 shows a structure diagram of another mode matching apparatus provided in the present invention.

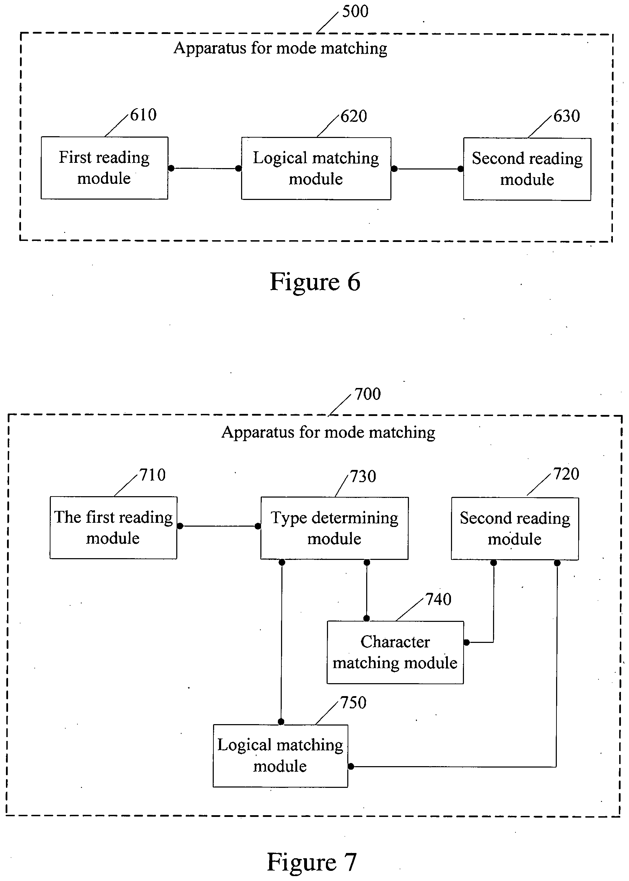

Figure 6 shows a structure diagram of a mode matching apparatus provided in the present invention.
Figure 7 shows a structure diagram of another mode matching apparatus provided in the present invention.

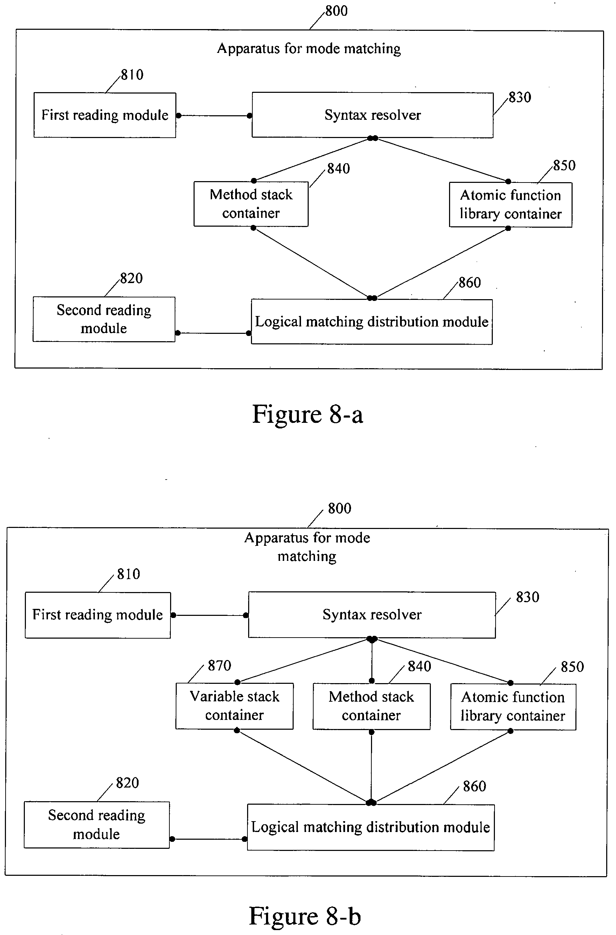

Figure 8-a shows a structure diagram of another mode matching apparatus provided in the present invention.
Figure 8-b shows a structure diagram of another mode matching apparatus provided in the present invention.

### DETAILED DESCRIPTION

The present invention provides a method and an apparatus for mode matching, as claimed in the independent claims.

The embodiments of the present invention are used to describe the method and apparatus for mode matching, the preferred embodiments being covered by the appended claims

To help those skilled in the art better understand the technical solution of the present invention, figures are used in the embodiments of the present invention to clearly and comprehensively describe the technical solutions. Obviously, the embodiments in the description are only a part of embodiments of the present invention. The scope of the invention is defined by the appended claims.

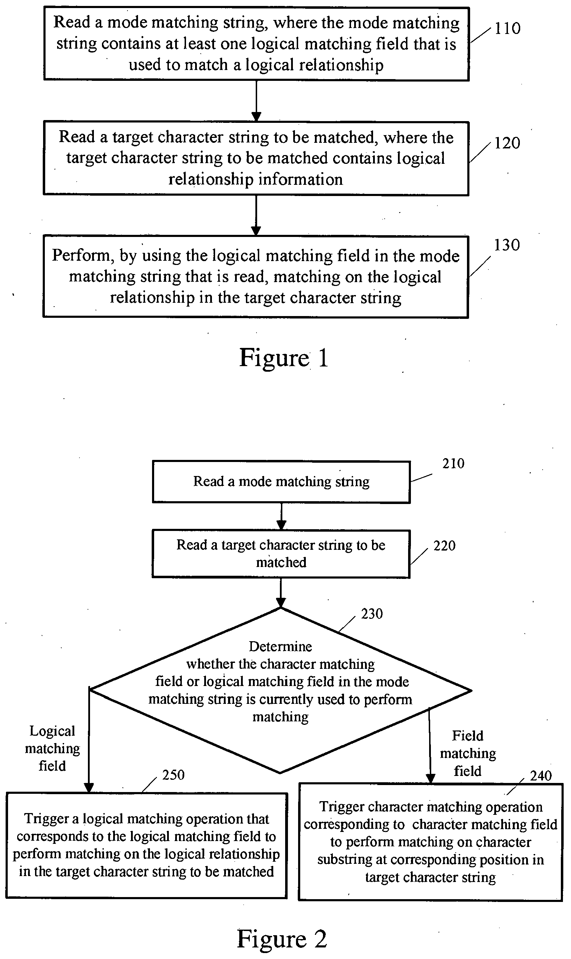

Referring to Figure 1, the steps are as follows:
110. Read a mode matching string. The mode matching string includes at least one logical matching field that is used to match a logical relationship.

In practice, the mode matching string that is read includes at least one logical matching field that is used to match a logical relationship. The logical matching field is used to match the logical relationship through a logical operation. Certainly, the mode matching string may further include at least one character matching field that is used to match a character string. The character matching field may be a regular expression or a character string (including one or more characters). In addition, if the character matching field includes a regular expression, the regular expression may be a Perl compatible regular expression (PCRE), portable operating system interface of Unix (POSIX) regular expression, or other types of regular expressions.

Further, to improve the matching speed, the mode matching string that is read can be pre-compiled, that is, before being matched, the mode matching string is compiled to be corresponding binary code. Certainly, the compilation can also be implemented during the matching.

120. Read a target character string to be matched.

The target character string is read from received data packets (such as messages). The target character string to be matched includes a logical relationship. The logical relationship is a specific logical relationship that exists between and is satisfied by character substrings located at two positions in the target character string to be matched.

130. Perform, by using the logical matching field in the mode matching string that is read, matching on the logical relationship in the target character string to be matched.

In an application scenario, if the mode matching string that is read includes multiple logical matching fields, the target character string is matched by sequentially using each of the logical matching fields according to the sequence of the logical matching fields in the mode matching string; or the target character string is concurrently matched by using each of the logical matching fields in the mode matching string; or the preceding two ways are combined, that is, matching is performed sequentially by using multiple logical matching fields, and matching is performed concurrently by using multiple logical matching fields. For example, the mode matching string includes 5 logical matching fields. In such case, the first 1 logical matching field is used to match the target character string first, then the middle 3 logical matching fields are used to match the target character string concurrently, and at last, the last 1 logical matching field is used to match the target character string,. Other cases may be deduced based on this case.

In actual applications, the logical operation described in the logical matching field can include one or more of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right. When the logical matching field in the mode matching string is used to perform matching, the matching may be performed on the logical matching relationship included in the target character string to be matched by performing a combination or one of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right. Certainly, the logical matching field may also correspond to other types of logical operations, which are not described here.

The logical relationship matched by the logical matching field includes a specific logical relationship which a certain character substring or multiple character substrings in the target character string satisfy.

It should be noted that the code of the logical matching field in the embodiment of the present invention complies with the syntax rules of various program languages such as the extensible markup language (XML, Extensible Markup Language) or self-defined simple script languages.

The logical operation that corresponds to the logical matching field can be implemented by invoking a function. For example, when the logical matching field in the mode matching string is used to perform matching, a corresponding function is invoked, and by performing a logical operation described by the function, the matching on the logical relationship included in the target character string is performed, and a matching result is returned. In addition, the logical operation can be described in the logical matching field, so that the logical operation may be directly implemented through the logical matching field without invoking a corresponding function.

In an application scenario, if the mode matching string includes at least one logical matching field used to match the logical relationship (by using a logical operation or other modes) and at least one character matching field used to match a character string, the target character string is matched sequentially by using the logical matching fields and the character matching fields according to the sequence of the logical matching fields and the character matching fields in the mode matching string; or the target character string is concurrently matched by using the logical matching fields and the character matching fields in the mode matching string; otherwise, a combination of the foregoing two matching ways is allowable. Other cases may be deduced based on this case.

The technical solution of the present invention supports the bandwidth management, content charging, and information security for the DPI devices, security protection devices, or other related devices.

It can be seen from the above that, in the embodiment of the present invention, at least one logical matching field that is used to match the logical matching relationship is introduced in the mode matching string, and the target character string is matched by using the mode matching string that includes the logical matching field, and the matching is performed on the logical relationship included in the target character string by using the logical matching field. Such mechanism enables the mode matching to support accurate retrieval and matching of text information that includes logical relationship information, which improves the capability of matching the text information that carries logical relationship information and extends applications of mode matching.

Another embodiment of the present invention may include: reading a mode matching string, where the mode matching string includes at least one logical matching field that is used to match the logical relationship, and at least one character matching field that is used to match a character string; reading a target character string to be matched, where the target character string to be matched includes a logical relationship; determining whether the character matching field or logical matching field in the mode matching string is currently used to perform matching; if it is determined that the character matching field in the mode matching string is currently used to perform matching, triggering a character matching operation that corresponds to the character matching field to perform matching on a character substring at a corresponding position in the target character string to be matched; if it is determined that the logical matching field in the mode matching string is currently used to perform matching, triggering a logical matching operation that corresponds to the logical matching field to perform matching on the logical relationship in the target character string to be matched.

Referring to Figure 2, the steps are as follows:
210. Read a mode matching string. The mode matching string includes at least one logical matching field that is used to match a logical relationship and at least one character matching field that is used to match a character string.

The logical matching field in the mode matching string is used to match the logical relationship through a logical operation. The character matching field may be a regular expression or a character string (including one or more characters). In addition, if the character matching field includes a regular expression, the regular expression may be PCRE, POSIX, or other types of regular expressions.

Further, to improve the matching speed, the mode matching string that is read can be pre-compiled, that is, before being matched, the mode matching string is compiled to be corresponding binary code. Certainly, the compilation can also be implemented during the matching.

220. Read the target character string to be matched.

The target character string is read from received data packets (such as messages). The target character string to be matched includes a logical relationship. The logical relationship is a specific logical relationship that exists between and is satisfied by character substrings at two positions in the target character string to be matched.

230. Determine whether the character matching field or logical matching field in the mode matching string is currently used to perform matching.

In actual applications, different types of matching fields may, for example, be set to different separators or formats. Therefore, it may be determined that each matching field in the mode matching string is a character matching field or a logical matching field according to the separators or formats.

If it is determined that the character matching field in the mode matching string is currently used to perform matching, perform step 240; if it is determined that the logical matching field in the mode matching string is currently used to perform matching, perform step 250.

240. Trigger a character matching operation that corresponds to the character matching field to perform matching on a character substring at a corresponding position in the target character string to be matched.

250. Trigger a logical matching operation that corresponds to the logical matching field to perform matching on the logical relationship in the target character string to be matched.

In actual applications, the logical operation described in the logical matching field may include one or more of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right. When it is determined that a matching unit that is currently used to perform matching in the mode matching string is a logical matching fields, the matching may be performed on the logical matching relationship included in the target character string to be matched by performing one or a combination of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right can be executed to match the logical relationship in the target character string. The logical matching field may also correspond to other types of logical operations, which are not described here.

The logical relationship matched by the logical matching field includes a certain logical relationship which a certain character substring or multiple character substrings in the target character string need to satisfy.

It should be noted that the code of the logical matching field in the embodiment of the present invention complies with the syntax rules of various program languages such as the extensible markup language XML or self-defined simple script languages.

The logical operation that corresponds to the logical matching field can be implemented by invoking a function. For example, when the logical matching field in the mode matching string is used to perform matching, a function that corresponds to the logical matching field is invoked, and by performing a logical operation described by the function, the matching on a logical relationship included by the target character string is performed, and a matching result is returned. In addition, the logical operation may be directly expressed in the logical matching field, so that the logical operation can be directly implemented through the logical matching field without invoking a corresponding function.

The technical solution of the present invention supports the bandwidth management, content charging, and information security for the DPI devices, security protection devices, or other related devices.

It can be seen from the above that, in the embodiment of the present invention, at least one logical matching field that is used to match the logical matching relationship is introduced in the mode matching string that includes the character matching field, and the target character string is matched by using the mode matching string that includes the logical matching field, in which the matching is performed on the character substring at a corresponding position in the target character string by using the character matching field, and the matching is performed on the logical relationship included in the target character string by using the logical matching field. Such mechanism enables the mode matching to support accurate retrieval and matching of text information that includes logical relationship information, which improves the capability of matching the text information that carries logical relationship information and extends applications of mode matching.

To help better understand the technical solution of the present invention, the following takes the process of matching a target character string by using several "logical matching fields" extended in the mode matching string that includes a PCRF as an example to describe the matching process.

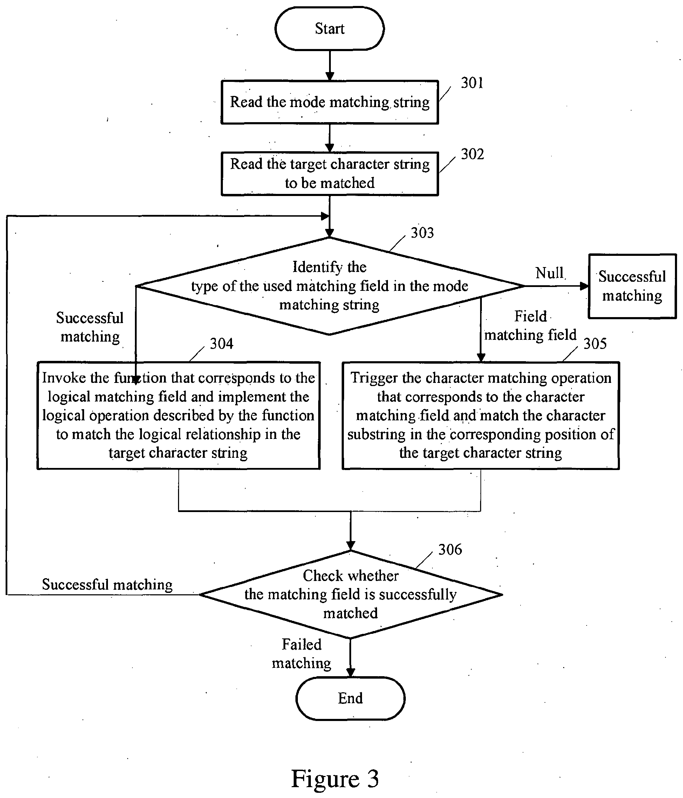

Referring to Figure 3, the steps are as follows:
301. Read a mode matching string.

The mode matching string includes multiple matching fields, specifically including at least one logical matching field that is used to match a logical relationship by using a logical operation or other modes, and at least one PCRE, or at least one character string (including one or more characters). The character string or PCRE in the mode matching string may be considered as a type of character matching field.

Further, to improve the matching speed, the mode matching string may be pre-compiled.

302. Read a target character string to be matched.

The target character string is read from received data packets (such as messages). The target character string to be matched includes a logical relationship. The logical relationship is a specific logical relationship that exists between and is satisfied by character substrings at two positions in the target character string to be matched.

303. Determine whether the character matching field or logical matching field in the mode matching string is currently used to perform matching.

If it is determined that the logical matching field in the mode matching string is currently used to perform matching, perform step 304.

If it is determined that the character matching field (PCRE or character string) in the mode matching string is currently used to perform matching, perform step 305.

If it is determined that there are no matching fields in the mode matching string (that is, all matching fields in the mode matching string are used to perform matching), it indicates that the target character string is successfully matched. In this case, the information about successful matching of the target character string is returned.

Specific symbols may be set in order to specify an area of a logical matching field. For example, an area of a logical matching field may begin at (?F and end at ")". The area between "(?F" and ")" is an area of a logical matching field. Certainly, other specific symbols may be used to specify an area of a logical matching field, which are not restricted here.

In actual applications, the logical operation described in the logical matching field may include one or more of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right. Certainly, one or more other operations may be included.

In the embodiment, that the logical operation that corresponds to the logical matching field may be implemented by invoking a function and may be taken as an example for description. The function that corresponds to the logical matching field describes a corresponding logical operation.

304; Invoke the function that corresponds to the logical matching field, perform matching on the logical relationship included in the target character string by performing the logical operation described in the function, and return a matching result; perform step 306.

For example, the following may be defined: when the result of a logical operation is 0, it indicates that the matching fails, otherwise, it indicates that the matching succeeds.

The logical relationship matched by the logical matching field includes a certain logical relationship which a certain character substring or multiple character substrings in the target character string need to satisfy.

305. Trigger the character matching operation that corresponds to the character matching field; match the character substring at a corresponding position in the target character string; return a matching result; perform step 306.

Various existing matching algorithms may be selected to match a corresponding character substring in the target character string by using the character matching field.

306. Check whether the matching succeeds.

If the matching succeeds, perform step 303.

Otherwise, the target character string fails to be matched and the matching process ends.

It is understandable that, step 303 to step 306 may be implemented repeatedly to match the target character string by using multiple matching fields included in the mode matching string.

It should be noted that the code of the logical matching field in the embodiment of the present invention complies with the syntax rules of various program languages such as the XML or self-defined simple script languages.

It is understandable that, the preceding process is described by taking the following as an example: the target character string is matched sequentially according to the sequence of the logical matching fields and the character matching fields in the mode matching string. Certainly, the target character string may be matched concurrently by using the logical matching fields and the character matching fields in the mode matching string, or the preceding two ways are combined, which are not described again here.

To facilitate understanding, figures are used to compare the common mode matching string in the prior art with the mode matching string provided in the present invention.

As shown in Figure 4-a, two logical matching fields are added to the common mode matching string. Two logical matching fields are inserted between character matching fields. The two logical matching fields may be used to implement the character matching or relationship matching between character substrings.

As shown in Figure 4-b, character matching fields 1-7 in the common mode matching string in the prior art form a character string (including one or more characters). When the common mode matching string successfully matches target character string 1 but fails to match target character string 2 because character matching fields 1 and 2 are different from a corresponding part in target character string 2. The character strings at position 1 and position 2 of each of the target character string 1 and target character string 2 must comply with a specific logical relationship. The character strings at position 3 and position 4 of each of the target character string 1 and target character string 2 must also comply with a specific logical relationship. As shown in Figure 4-b, character matching fields 1 and 2 of the logical matching fields are added to the mode matching string as regular expressions (they are used to indicate any character string). The logical matching field inserted behind character matching field 2 of the mode matching string describes a logical relationship with which the character strings at position 1 and position 2 of the target character string must comply. The logical matching field inserted behind character matching field 4 of the mode matching string describes a logical relationship with which the character strings in position 3 and position 4 of the target character string must comply. When the mode matching string that is added the logical matching fields is used to match target character strings 1 and 2, character strings at position 1 and position 2 comply with the specific logical relationship and character strings at position 3 and position 4 also comply with the specific logical relationship. Therefore, the matching succeeds. If any or both logical relationships are not met, the matching fails.

As shown in Figure 4-c, character matching fields 1-7 in the common mode matching string form a character string (including one or more characters). The common mode matching string successfully matches the target character string (the character strings at position 1 and position 2 must comply with a specific logical relationship, and the character strings at position 3 and position 4 must also comply with the specific logical relationship) because the common mode matching string cannot match the logical relationship between substrings in the target character string. As shown in Figure 4-c, the logical character string that describes the relationship between character substrings at position 1 and position 2 of the target character string is inserted behind character matching field 2 and the logical character string that describes the relationship between character substrings at position 3 and position 4 of the target character string is inserted behind character matching field 4. When the extended mode matching string is used to match the target character string, the matching fails if the character substrings at position 1 and position 2 or the character substrings at position 3 and position 4 do not comply with a corresponding logical relationship. If both logical relationships are met, the matching succeeds.

It may be seen from above that, the mode matching string with extended logical matching fields that is used to match target character strings has better readiness and a wider application scope.

To facilitate understanding, the following takes an application example to describe the matching process.

Syntax for activating a logical matching field is defined by using examples. Other syntax may also be defined to activate logical matching fields.

For example, a logical matching field area begins at (?F and ends at ")". The area between "(?F" and ")" is the logical matching field area.

For example, in the PCRE "^ABCD(**?F** somefunc(...))", "^ABCD" indicates a PCRE matching unit, "(?F" and ")" specify the area "somefunc(...)", which is a logical matching field area.

The syntax and semantics of the logical matching fields in the example are as follows:
Control unit = "(" "?" "F" method name "("[parameter[*SP "," *SP parameter]] ")" ")"
Method name = (ALPHA / "_")*(ALPHA / DIGIT / "_")
Parameter = Constant / integer variable / PCRE capture / expression
Constant = 1*DIGIT
Integer variable = "<" (ALPHA / "_")*(ALPHA/ DIGIT / "_") ">"
PCRE capture = "{" capture index number "} "
Capture index number = 1*DIGIT
Expression = 1*((unary operator operation unit) / (operation unit binary operator operation unit))
Unary operator= "!" / "∼"
Binary operator= "+" / "-" / "*" / "/" / "%" / "&" / "|" / "^" / "<<" / ">>" / "<" / "<=" / ">=" / ">" / "==" / "!=" / "&&" / "||" /"(" /")"
Operation unit = Constant / Integer variable / PCRE capture

In the PCRE, the target character string matched between "(" and with ")" (except the logical matching fields) is the captured character string.

Assume that the target character string is "ABCDEFG". If the PCRE matching unit is "^(...)DE(..)", capture character string 1 is the part in the brackets before "DE" and matches "ABC" in the target character string. Therefore, capture character string 1 (may be represented by "{1}") indicates "ABC". Capture character string 2 is the part in the brackets after "DE" and matches "FG" in the target character string. Therefore, capture character string 2 (may be represented by" {2}") indicates "FG". Other cases may be deduced based on this case.

The following table lists the methods supported by the logical matching fields in the embodiment of the present invention.

| **Method Name** | **Parameter 1** | **Parameter 2** | **Parameter 3** | **Function** |
|---|---|---|---|---|
| **assert** | Expression | None | None | To calculate a value of the expression of parameter 1. |
| | | | | If the value of the expression of parameter 1 is 0, that the matching fails is returned in this method. Otherwise, that the matching succeeds is returned. |
| **set** | Integer variable | Expression | None | To calculate a value of the expression of parameter 2 and assign the value of the expression to an integer variable of parameter 1. |
| | | | | If the expression of parameter 2 is a character string, the character string is converted into an integer value and the integer value is assigned to an integer variable of parameter 1, and that the matching succeeds is always returned in this method. |
| ... | ... | ... | ... | ... |

According to the definition of the syntax of logical matching fields, "^ABCD(?F assert(1, 2))" does not comply with the syntax rule while "^ABCD(?F assert(1 + 2 = 3))" complies with the syntax rule of the mode matching string.

Assume that the feature character string of protocol A is "A1A2A3A4+B1B2B3B4=3010", A1, A2, A3, A4, B1, B2, B3, and B4 are integers from 1 to 9. The feature character string must comply with the logical condition, that is, "A1A2A3A4+B1B2B3B4=3010".

Based on the preceding syntax definition, the protocol A-based mode matching string (with extended logical matching fields) is as follows, but is not limited to the following:
^([1-9][1-9][1-9][1-9]((**?F** set(<var1>, {1}))\+([1-9][1-9][1-9][1-9])(**?F** set(<var2>, {2}))=3010(**?F** assert(<var1> + <var2> = 3010))

In the preceding mode matching string, three logical matching fields are added to the mode matching string:
(**?F** set(<var1>,{1}))
(**?F** set(<var2>,{2}))
(**?F** assert(<var1> + <var2> = 3010))

To facilitate understanding, the following takes the process of matching the target character string "1234+1776=3010" as an example to describe the process of matching the mode matching string with extended logical matching fields.

The matching on the first logical matching field "(**?F** set(<var1>, {1}))" is performed after "1234" is matched. After "1234" is matched, the matching of "(**?F** set(<var1>, {1}))" is activated. The library function "set" is invoked and capture 1, that is, "1234" is converted into an integer. The integer is assigned to the variable "<var1>". "(**?F** set(<var1>, {1}))" is successfully matched and the subsequent matching continues.

Similarly, the matching on the second logical matching field "(**?F** set(<var2>,{2}))" is performed after the character string "1776" is matched. After "1776" is matched, the matching of "(**?F** set(<var2>,{2}))" is activated. The library function "set" is invoked and capture 2, that is, "1776" is converted into an integer. The integer is assigned to the variable "<var2>"."(**?F** set(<var2>, {2}))" is successfully matched and the subsequent matching continues.

The matching on the third logical matching field "(**?F** assert(<var1> + <var2> = 3010))" is performed after the character string "3010" is matched. After "3010" is matched, the matching of "(**?F** assert(<var1> + <var2> = 3010))" is activated. The library function "assert" is invoked to calculate a value of the expression "<var1> + <var2> = = 3010". The value of the expression is 1. Therefore, the matching of "(**?F** assert(<var1> + <var2> = =3010))" succeeds.

The target character string "1234+1776=3010" is successfully matched and it complies with protocol A.

To facilitate understanding, the following describes a module implementation structure of the mode matching apparatus by using an example to describe the matching process. The mode matching apparatus may be divided into a character matching subsystem and a logical matching subsystem. The character matching subsystem reads a mode matching string and a target character string to be matched, and performs a character matching operation that corresponds to the character matching field.

As shown in Figure 5, a logical matching subsystem is added to a mode matching apparatus for logical matching. The logical matching subsystem includes: a syntax resolver, a variable stack container, a method stack container, an atomic function library container, and a logical matching distribution module.

The syntax resolver is configured to resolve syntax of a logical matching field.

The variable stack container is configured to store a variable introduced during a process of performing a logical operation that corresponds to one or more logical matching fields in the mode matching string.

The method stack container is configured to store an entry address of a function that corresponds to each logical matching field that is in the mode matching string and resolved by the syntax resolver, where the entry address of the function may be obtained based on the name of the function that corresponds to the logical matching field resolved by the syntax resolver and a mapping table related to the name of the function.

A mode matching string may include multiple logical matching fields. When the entry address of the function that corresponds to each logical matching field is stored in the method stack container during the compilation, the storage index can be the position of the logical matching field in the mode matching string.

The atomic function library container is configured to store a function invoking group (such as "assert" and "set"), including the function of the entry address stored in the method stack container.

The logical matching distribution module is configured to invoke, during a process of performing logical matching that corresponds to a certain logical matching field in the mode matching string, a corresponding function in the function invoking group stored by the atomic function library container to perform matching on the logical relationship in the target character string to be matched read by the second reading module according to the entry address of the function that corresponds to the logical matching field stored in the method stack container.

The logical matching distribution module completes the atomic function invoking and matching process.

The mode matching can be implemented based on the structure of the mode matching apparatus in Figure 5.

The technical solution of the present invention supports the bandwidth management, content charging, and information security for DPI devices, security protection devices, or other related devices.

It can be seen from the above that, in the embodiment of the present invention, at least one logical matching field that is used to match the logical matching relationship by performing a logical operation is introduced in the mode matching string, and the target character string is matched by using the mode matching string that includes the logical matching field, and when the logical matching field in the mode matching string is used to perform matching, the matching is performed on the logical relationship included in the target character string by performing a logical operation that corresponds to the logical matching field. Such mechanism enables the mode matching to support accurate retrieval and matching of text information that includes logical relationship information, which improves the capability of matching the text information that carries logical relationship information and extends applications of mode matching.

Further, the logical matching fields may be used to perform various logical matching and perform the retrieval and matching of variable feature character strings. If a mode matching string of a new protocol is added to a DPI device, the matching of a feature character string of the new protocol may be easily completed based on the previous mode matching process, and the seamless upgrade on function and service identifying of the DPI device is supported.

The present invention further provides a related apparatus to implement the technical solution.

As shown in Figure 6, a mode matching apparatus 600 is provided. The mode matching apparatus includes a first reading module 610, a second reading module 620, and a logical matching module 630.

The first reading module 610 is configured to read a mode matching string. The mode matching string includes at least one logical matching field that is used to match a logical relationship.

In actual applications, the mode matching string that is read by the first reading module 610 includes at least one logical matching field that is used to match a logical relationship through a logical operation or other methods. Certainly, the mode matching string further includes at least one character matching field that is used to match a character string. The character matching field may be a regular expression or a character string (including one or more characters).

If the mode matching string read by the first reading module 610 includes a character matching field, and one or more character matching fields include a regular expression, the regular expression may be a PERL compatible regular expression (PCRE), a portable operating system interface of Unix (POSIX), or other types of regular expressions.

The second reading module 620 is configured to read a target character string to be matched.

The second reading module 620 reads the target character string from received data packets (such as messages). The target character string to be matched includes a logical relationship. The logical relationship is a specific logical relationship that exists between and is satisfied by character substrings at two positions in the target character string to be matched.

The logical matching module 630 is configured to perform, by using the logical matching field read by the first reading module 610, matching on the logical relationship in the target character string read by the second read module 620.

In an application scenario, the logical matching module 630 performs by performing a logical operation that corresponds to the logical matching field, matching on the logical relationship in the target character string read by the second reading module 620.

In actual applications, the logical operation described in the logical matching field can include one or more of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right. When a certain logical matching field in the mode matching string is used to perform matching, the matching may be performed on the logical matching relationship included in the target character string to be matched by performing one or a combination of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right.

The logical relationship matched by the logical matching field includes a certain logical relationship which a certain character substring or multiple character substrings in the target character string need to satisfy.

In an application, if the mode matching string read by the first reading module 610 includes multiple logical matching fields, the logical matching module 630 may match the target character string by sequentially using each of the logical matching fields according to the sequence of the logical matching fields in the mode matching string, or match the target character string concurrently by using each of the logical matching fields in the mode matching string. Or, the preceding two ways are combined, that is, matching is performed sequentially by using multiple logical matching fields, and matching is performed concurrently by using multiple logical matching fields. For example, the mode matching string includes 6 logical matching fields. In such case, the first 1 logical matching field is used to match the target character string first, then the middle 3 logical matching fields are used to match the target character string concurrently, and at last, the last 1 logical matching field is used to match the target character string. Other cases may be deduced based on this case.

In an application, the mode matching string read by the first reading module 610 may further include at least one character matching field that is used to match the target character string. In actual applications, different types of matching fields may, for example, be set to different separators or formats. Therefore, it may be determined that each matching field in the mode matching string is a character matching field or a logical matching field according to the separators or formats. Specific symbols may be set in order to specify an area of a logical matching field. For example, an area of a logical matching field may begin at (?F and end at ")". The area between "(?F" and ")" is an area of a logical matching field. Certainly, other specific symbols may be used to specify an area of a logical matching field, which are not restricted here.

The mode matching apparatus 600 may further include a character matching module (not shown in Figure 6).

The character matching module is configured to perform, by using the character matching field in the mode matching string, character matching on the target character string to be matched.

For example, the target character string read by the second reading module 620 may be matched by the logical matching field and character matching field according to the sequence of the logical matching fields and character matching fields in the mode matching string read by the first reading module 610; or the target character string read by the second reading module 620 may be concurrently matched by the logical matching fields and the character matching fields in the mode matching string read by the first reading module 610. Or, a combination of the foregoing two matching ways is allowable.

In an application scenario, the logical matching module 630 includes a syntax resolver, a method stack container, an atomic function library container, and a logical matching distribution module (not shown in Figure 6).

The syntax resolver is configured to resolve syntax of the logical matching field in the mode matching string read by the first reading module 610.

The method stack container is configured to store an entry address of a function that corresponds to each logical matching field that is in the mode matching string and resolved by the syntax resolver.

The atomic function library container is configured to store a function invoking group that includes the function (that is, the function that corresponds to each logical matching field in the mode matching string).

The logical matching distribution module is configured to invoke, during a process of performing logical matching that corresponds to the logical matching field in the mode matching string, a corresponding function in the function invoking group stored by the atomic function library container to perform matching on the logical relationship in the target character string to be matched read by the second reading module 620 according to the entry address of the function that corresponds to the logical matching field stored in the method stack container.

In an application scenario, a logical matching module 630 further includes:
a variable stack container, configured to store a variable introduced during a process of performing a logical operation that corresponds to the logical matching field in the mode matching string read by the first reading module.

Further, the mode matching apparatus 600 may further include a pre-compilation module, configured to pre-compile the mode matching string read by the first reading module 610.

It should be noted that the code of the logical matching field in the embodiment of the present invention complies with the syntax rules of various program languages such as the XML or self-defined simple script languages.

It may be understandable that, the mode matching apparatus 600 is configured to implement all the technical solutions of the present invention. For details about the functions of each function module, refer to corresponding embodiments, which are not described here.

It may be understandable that, the mode matching apparatus 600 in the embodiment may be set on the DPI devices, security protection devices, or other related devices, so as to support functions of the bandwidth management, content charging, and information security.

It can be seen from the above that, in the embodiment of the present invention, the mode matching apparatus 600 introduces, in the mode matching string, at least one logical matching field that is used to match the logical matching relationship by performing a logical operation, and the mode matching apparatus 600 matches the target character string by using the mode matching string that includes the logical matching field, and when the logical matching field in the mode matching string is used to perform matching, the matching is performed on the logical relationship included in the target character string by performing a logical operation that corresponds to the logical matching field. Such mechanism enables the mode matching to support accurate retrieval and matching of text information that includes logical relationship information, which improves the capability of matching the text information that carries logical relationship information and extends applications of mode matching.

As shown in Figure 7, a mode matching apparatus 700 is provided. The mode matching apparatus includes a first reading module 710, a second reading module 720, type determining module 730, a character matching module 740, and a logical matching module 750.

The first reading module 710 is configured to read a mode matching string, where the mode matching string includes at least one logical matching field that is used to match a logical relationship and at least one character matching field that is used to match a character string.

In actual applications, the mode matching string that is read by the first reading module 710 includes at least one logical matching field that is used to match a logical relationship through a logical operation or other methods. Certainly, the mode matching string further includes at least one character matching field that is used to match a character string. The character matching field may be a regular expression or a character string (including one or more characters).

If the mode matching string read by the first reading module 710 includes a character matching field, and one or more character matching fields include a regular expression, the regular expression may be a PERL compatible regular expression (PCRE), a portable operating system interface of Unix (POSIX), or other types of regular expressions.

The second reading module 720 is configured to read a target character string to be matched.

The second reading module 720 reads the target character string from received data packets (such as messages). The target character string to be matched includes a logical relationship. The logical relationship is a specific logical relationship that exists between and is satisfied by character substrings at two positions in the target character string to be matched. .

The type determining module 730 is configured to determine whether the character matching field or logical matching field in the mode matching string read by the first reading module 710 is currently used to perform matching.

In actual applications, different types of matching fields may, for example, be set to different separators or formats.. Therefore, the type determining module 730 may determine that each matching field in the mode matching string is a character matching field or a logical matching field according to the separators or formats. Specific symbols may be set in order to specify an area of a logical matching field. For example, an area of a logical matching field may begin at (?F and end at ")". The area between "(?F" and ")" is an area of a logical matching field. Certainly, other specific symbols may be used to specify an area of a logical matching field, which are not restricted here.

The character matching module 740 is configured to: if type determining module 730 determines that the character matching field in the mode matching string is currently used to perform matching, trigger a character matching operation that corresponds to the character matching field to perform matching on a character substring at a corresponding position in the target character string to be matched.

The logical matching module 750 is configured to: if type determining module 750 determines that the logical matching field in the mode matching string is currently used to perform matching, trigger a logical matching operation that corresponds to the logical matching field to perform matching on the logical relationship in the target character string to be matched.

The logical relationship matched by the logical matching field includes a certain logical relationship which a certain character substring or multiple character substrings in the target character string need to satisfy.

In an application scenarios, the logical matching module 750 is specifically configured to: if the type determining module 730 determines that the logical matching field in the mode matching string is currently used to perform matching, perform, by triggering a logical matching operation that corresponds to the logical matching field, matching on the logical relationship in the target character string to be matched.

In actual applications, the logical operation described in the logical matching field may include one or more of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right. When a certain logical matching field in the mode matching string is used to perform matching, the logical matching module 750 may perform the matching on the logical matching relationship included in the target character string to be matched by performing one or a combination of the following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right.

In an application scenario, the logical matching module 750 includes a syntax resolver, a method stack container, an atomic function library container, and a logical matching distribution module (not shown in Figure 7).

The syntax resolver is configured to resolve syntax of a logical matching unit in the mode matching string read by the first reading module 710.

The method stack container is configured to store an entry address of a function that corresponds to each logical matching unit that is in the mode matching string and resolved by the syntax resolver.

The atomic function library container is configured to store a function invoking group that includes the function (that is, the function that corresponds to each logical matching field in the mode matching string).

The logical matching distribution module is configured to invoke, during a process of performing logical matching that corresponds to the logical matching field in the mode matching string, a corresponding function in the function invoking group stored by the atomic function library container to perform matching on the logical relationship in the target character string to be matched read by the second reading module 720 according to the entry address of the function that corresponds to the logical matching field stored in the method stack container.

In an application scenario, the logical matching module 750 further includes:
a variable stack container, configured to store a variable introduced during a process of performing a logical operation that corresponds to the logical matching field in the mode matching string read by the first reading module 710.

It may be understandable that, the mode matching apparatus 700 is configured to implement all the technical solutions of the present invention. For details about the functions of each function module, refer to the corresponding embodiments, which are not described here.

It may be understandable that, the mode matching apparatus 700 in the embodiment may be set on the DPI devices, security protection devices, or other related devices, so as to support functions of the bandwidth management, content charging, and information security.

It can be seen from the above that, in the embodiment of the present invention, the mode matching apparatus 700 introduces at least one logical matching field that is used to match the logical matching relationship in the mode matching string that includes the character matching field, and matches the target character string using the mode matching string that includes the logical matching field, in which the matching is performed on the character substring at a corresponding position in the target character string by using the character matching field and the matching is performed on the logical relationship included in the target character string by using the logical matching field. Such mechanism enables the mode matching to support accurate retrieval and matching of text information that includes logical relationship information, which improves the capability of matching the text information that carries logical relationship information and extends applications of mode matching.

As shown in Figure 8-a, a mode matching apparatus 800 provided by an embodiment of the present invention. A mode matching apparatus 800 includes a first reading module 810, a second reading module 820, a syntax resolver 830, a method stack container 840, an atomic function library container 850, and a logical matching distribution module 860.

The first reading module 810 is configured to read a mode matching string, where the mode matching string includes at least one logical matching field that is used to match a logical relationship.

In actual applications, the mode matching string that is read by the first reading module 810 may include at least one logical matching field that is used to match a logical relationship through a logical operation or other methods. Certainly, the mode matching string may further include at least one character matching field that is used to match a character string. The character matching field may be a regular expression or a character string (including one or more characters).

If the mode matching string read by the first reading module 810 includes a character matching field, and one or more character matching fields include a regular expression, the regular expression may be a PERL compatible regular expression (PCRE), a portable operating system interface of Unix (POSIX), or other types of regular expressions.

In actual applications, different types of matching fields may, for example, be set to different separators or formats. Therefore, it may be determined that each matching field in the mode matching string is a character matching field or a logical matching field according to the separators or formats. Specific symbols may be set in order to specify an area of a logical matching field. For example, an area of a logical matching field may begin at (?F and end at ")". The area between "(?F" and ")" is an area of a logical matching field. Certainly, other specific symbols may be used to specify an area of a logical matching field, which are not restricted here.

The second reading module 820 is configured to read a target character string to be matched.

The second reading module 820 reads the target character string from received data packets (such as messages). The target character string to be matched includes a logical relationship. The logical relationship is a logical relationship that needs to be satisfied between character substrings at two positions in the target character string to be matched.

The syntax resolver 830 is configured to resolve syntax of a logical matching unit in the mode matching string read by the first reading module 810.

The method stack container 840 is configured to store an entry address of a function that corresponds to each logical matching field that is in the mode matching string and resolved by the syntax resolver 830; obtain the entry address of the function based on the name of the function that corresponds to the logical matching field resolved by the syntax resolver 830 and a mapping table related to he name of the function.

The atomic function library container 850 is configured to store a function invoking group includes the function (that is, the function that corresponds to each logical matching field in the mode matching string).

The logical matching distribution module 860 is configured to invoke, during a process of performing logical matching that corresponds to the logical matching field in the mode matching string, a corresponding function in the function invoking group stored by the atomic function library container 850 to perform matching on the logical relationship in the target character string to be matched read by the second reading module 820 according to the entry address of the function that corresponds to the logical matching field stored in the method stack container 840.

The logical relationship matched by the logical matching field includes a certain logical relationship which a certain character substring or multiple character substrings in the target character string need to satisfy.

As shown in Figure 8-b, the mode matching apparatus 800 further includes:
a variable stack container 870, configured to store a variable introduced during a process of performing a logical operation that corresponds to the logical matching field in the mode matching string.

The modules of mode matching apparatus 800 work as follows:
After the first reading module 810 reads the mode matching string that includes at least one logical matching field that is used to match the logical relationship, the syntax resolver 830 resolves the syntax of the logical matching field in the mode matching string read by the first reading module 810; the method stack contain 840 stores the entry address of the function that corresponds to each logical matching field in the mode matching string resolved by the syntax resolver 830; the logical matching distribution module 860 invokes, during a process of performing logical matching that corresponds to the logical matching field in the mode matching string, a corresponding function in the function invoking group stored by the atomic function library container 850 to perform matching on the logical relationship in the target character string to be matched read by the second reading module 820 according to the entry address of the function that corresponds to the logical matching field stored in the method stack container 840. If a variable is introduced, the variable stack container 870 stores the variable.

It may be understandable that, the mode matching apparatus 800 is configured to implement part or all the technical solutions of the present invention. For details about the functions of each function module, refer to corresponding embodiments, which are not described here.

It may be understandable that, the mode matching apparatus 800 in the embodiment may be set on the DPI devices, security protection devices, or other related devices, so as to support functions of the bandwidth management, content charging, and information security.

It can be seen from the above that, the mode matching apparatus 800 in the embodiment introduces, in the mode matching string, at least one logical matching field that is used to match the logical matching relationship, introduces the syntax resolver that is configured to resolve the syntax of the logical matching field in the mode matching string, introduces the method stack container that is configured to store the entry address of the function that corresponds to each logical matching field in the mode matching string resolved by the syntax resolver, and introduces the atomic function library container that is configured to store a function invoking group. During a process of performing a logical matching operation that corresponds to the logical matching field in the mode matching string, a corresponding function in the function invoking group stored by the atomic function library container is invoked to perform matching on the logical relationship in the read target character string to be matched according to the entry address of the function that corresponds to the logical matching field stored in the method stack container. The implementation architecture is simple and flexible. The mode matching system based on the present architecture improves the capability of matching the text information that carries logical relationship information and extends applications of mode matching.

It should be noted that the method embodiments are described using a series of action combinations to simplify the description. Those skilled in the art must understand that the present invention is not restricted by the action sequence. According to the present invention, certain processes can be implemented in other sequence or simultaneously. Those skilled in the art must understand that the embodiments in the present document are exemplary embodiments. The related actions and modules are not definitely mandatory in the present invention whose scope is defined by the appended claims.

The preceding embodiments pose different emphases on the descriptions. Certain embodiments do not provide detailed description. For details, refer to the description of other embodiments.

It can be seen from the above that, in a technical solution provided by the embodiments of the present invention, at least one logical matching field that is used to match the logical matching relationship by performing a logical operation is introduced in the mode matching string, and the target character string is matched by using the mode matching string that includes the logical matching field, and when the logical matching field in the mode matching string is used to perform matching, the matching is performed on the logical relationship included in the target character string by performing a logical operation that corresponds to the logical matching field. Such mechanism enables the mode matching to support accurate retrieval and matching of text information that includes logical relationship information, which improves the capability of matching the text information that carries logical relationship information and extends applications of mode matching.

It can be seen from the above that, in another technical solution provided by the embodiments of the present invention, at least one logical matching field that is used to match the logical matching relationship is introduced in the mode matching string that includes the character matching field, and the target character string is matched by using the mode matching string that includes the logical matching field, in which the matching is performed on the character substring at a corresponding position in the target character string by using the character matching field and the matching is performed on the logical relationship included in the target character string by using the logical matching field. Such mechanism enables the mode matching to support accurate retrieval and matching of text information that includes logical relationship information, which improves the capability of matching the text information that carries logical relationship information and extends applications of mode matching.

Further, the logical matching fields may be used to perform various logical matching and perform the retrieval and matching of variable feature character strings. If a mode matching string of a new protocol is added to a DPI device, the matching of a feature character string of the new protocol may be easily completed based on the previous mode matching process, and the seamless upgrade on function and service identifying of the DPI device is supported.

Those skilled in the art can understand that part or all steps in various methods used in the embodiments are complete by programs using the related instructions on the related hardware. The programs can be stored in the readable storage medium of a computer. The storage medium includes: read-only memory (ROM), random access memory (RAM), disk, or CD-ROM.

This document describes the method and apparatus for mode matching. This document describes the principles and implementation methods using examples. The embodiments are used to help those skilled in the art understand the methods and core principles. Based on the principles of the present invention, the specific implementation methods and application scope can be changed.

The content in this document must not be understood as restricts on the present invention, whose scope is defined by the appended claims.

## Claims

1. A method for mode matching which is used to identify various characteristic words from packets in various formats, wherein the method is applied to implement Deep Packet Inspection, DPI, comprising:
reading (110) a mode matching string, wherein the mode matching string comprises at least one logical matching field that is used to match a logical relationship;
reading (120) a target character string to be matched wherein the target character string to be matched is read from received data packets, the method being **characterized in that** the target character string to be (120) matched comprises a logical relationship, and the logical relationship is a specific logical relationship which is satisfied by a certain character substring or multiple character substrings in the target character string to be matched;
performing (130) by using the logical matching field in the mode matching string, logical matching on the logical relationship in the target character string to be matched;
wherein: the performing, by using the logical matching field, the logical matching on the logical relationship in the target character string to be matched comprises: performing, by performing a logical operation that corresponds to the logical matching field, the logical matching on the logical relationship in the target character string to be matched.

2. The method of claim 1, wherein:
the performing, by performing a logical operation that corresponds to the logical matching field, the logical matching on the logical relationship in the target character string to be matched comprises:
invoking a function that corresponds to the logical matching field; performing, by performing a logical operation that is described by the function, the logical matching on the logical relationship in the target character string to be matched, and returning a matching result.

3. The method of claim 1 or claim 2, wherein the logical operation that corresponds to the logical matching field comprises one of following operation or a combination of more following operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right.

4. The method of claim 1 to claim 2, wherein:
the mode matching string further comprises: at least one character matching field that is used to match a character string, and the method further comprises: performing, by using the character matching field in the mode matching string, character matching on the target character string to be matched, wherein the logical matching field and character matching field are used to match the target character string based on the sequence of the logical matching fields and character matching fields or the logical matching fields and character matching fields are concurrently used to match the target character string.

5. The method of claim 1, wherein the mode matching string further comprises at least one character matching field that is used to match a character string, and the method futher comprises:
determining whether the character matching field or logical matching field in the mode matching string is currently used to perform matching;
if it is determined that the character matching field in the mode matching string is currently used to perform matching, triggering a character matching operation that corresponds to the character matching field to perform matching on a character substring at a corresponding position in the target character string to be matched; and
if it is determined that the logical matching field in the mode matching string is currently used to perform matching, triggering a logical matching operation that corresponds to the logical matching field to perform matching on the logical relationship in the target character string to be matched.

6. The method of claim 5, wherein:
the triggering a logical matching operation that corresponds to the logical matching field to perform matching on the logical relationship in the target character string to be matched comprises: performing, by performing a logical operation that corresponds to the logical matching field, the matching on the logical relationship in the target character string to be matched.

7. The method of claim 6, wherein the logical operation that corresponds to the logical matching field comprises one of following operations or a combination of more fllowing operations: adding, subtracting, multiplying, dividing, equal to, not equal to, greater than, equal to or greater than, less than, less than or equal to, assignment, logical OR, logical AND, bitwise AND, bitwise OR, other than, negation, exclusive OR, shift left, and shift right.

8. The method of any one of claim 5 to claim 7, wherein,
the character matching field is a regular expression or a character string.

9. An apparatus for mode matching which is used to identify various characteristic words from packets in various formats, wherein the apparatus is applied to implement Deep Packet Inspection, DPI, comprising:
a first reading module (610), configured to read a mode matching string, wherein the mode matching string comprises at least one logical matching field that is used to match a logical relationship;
a second reading module (630) configured to read a target character string to be matched, wherein the target character string to be matched comprises a logical relationship, wherein the target character string to be matched is read from received data packets, and the logical relationship is a specific logical relationship which is satisfied by a certain character substring or multiples character substrings in the target character string to be matched;
a logical matching module (620) configured to perform, by using the logical matching field, matching on the logical relationship in the target character string read by the second reading module;
wherein the logical matching module is specifically configured to perform, by performing a logical operation that corresponds to the logical matching field, the matching on the logical relationship in the target character string to be matched.

10. The apparatus of claim 9 wherein
the mode matching string read by the first reading module further further comprises at least one character matching field that is used to match a character string, and the mode matching apparatus further comprises a character matching module;
the character matching module is configured to perform, by using the character matching field in the mode matching string, character matching on the target character string to be matched, wherein the matching on the target character string to be matched is performed according to a sequence of the logical matching fields and character matching fields in the mode matching string; or logical matching and character matching are concurrently performed by using the logical matching fields and character matching fields in the mode matching string to perform the matching on the target character string to be matched.

11. The apparatus of claim 9, wherein
the logical matching module comprises:
a syntax resolver, configured to resolve syntax of the logical matching field in the mode matching string read by the first reading module;
a method stack container, configured to store an entry address of a function that corresponds to each logical matching field that is in the mode matching string and resolved by the syntax resolver;
an atomic function library container, configured to store a function invoking group that includes the function;
a logical matching distribution module, configured to invoke, during a process of performing logical matching that corresponds to the logical matching field in the mode matching string, a corresponding function in the function invoking group stored by the atomic function library container to perform matching on the logical relationship in the target character string to be matched read by the second reading module according to the entry address of the function that corresponds to the logical matching field stored in the method stack container.

12. The apparatus of claim 11, further comprising:
a variable stack container, configured to store a variable introduced during a process of performing the logical operation that corresponds to the logical matching field in the mode matching string read by the first reading module.

13. The apparatus of claim 10, wherein the apparatus further comprises:
a type determining module, configured to determine whether the character matching field or logical matching field in the mode matching string is currently used to perform matching;
a character matching module, configured to: if the type determining module determines that the character matching field in the mode matching string is currently used to perform matching, trigger a character matching operation that corresponds to the character matching field to perform matching on a character substring at a corresponding position in the target character string to be matched;
a logical matching module, configured to: if the type determining module determines that the logical matching field in the mode matching string is currently used to perform matching, trigger a logical matching operation that corresponds to the logical matching field to perform matching on the logical relationship in the target character string to be matched.

14. The apparatus of claim 13, wherein
a logical matching module is configured to: if the type determining module determines that the character matching field in the mode matching string is currently used to perform matching, perform, by performing a logical operation that corresponds to the logical matching field, the matching on the logical relationship in the target character string to be matched.

15. The apparatus of claim 13, wherein
the logical matching module comprises:
the syntax resolver, configured to resolve syntax of a logical matching unit in the mode matching string read by the first reading module;
a method stack container, configured to store an entry address of a function that corresponds to each logical matching field that is in the mode matching string and resolved by the syntax resolver.
an atomic function library container, configured to store a function invoking group that includes the function;
a logical matching distribution module, configured to invoke, during a process of performing logical matching that corresponds to the logical matching field in the mode matching string, a corresponding function in the function invoking group stored by the atomic function library container to perform matching on the logical relationship in the target character string to be matched read by the second reading module according to the entry address of the function that corresponds to the logical matching field stored in the method stack container.

16. The apparatus of claim 15, further comprising:
a variable stack container, configured to store a variable introduced during a process of performing the logical operation that corresponds to the logical matching field in the mode matching string read by the first reading module.

## Patentansprüche

1. Verfahren zum Mode Matching, das verwendet wird, um verschiedene charakteristische Wörter aus Paketen in verschiedenen Formaten zu identifizieren, wobei das Verfahren dazu angewandt wird, um Deep Packet Inspection (DPI) zu implementieren, umfassend:
Lesen (110) eines Mode-Matching-String, wobei der Mode-Matching-String mindestens ein logisches Matching-Feld aufweist, das verwendet wird, um eine logische Beziehung übereinzustimmen;
Lesen (120) eines übereinzustimmenden Zielzeichenstring, wobei der übereinzustimmende Zielzeichenstring aus Empfangsdatenpaketen gelesen wird, wobei das Verfahren **dadurch gekennzeichnet ist, dass** der übereinzustimmende Zielzeichenstring eine logische Beziehung aufweist und die logische Beziehung eine spezifische logische Beziehung ist, die durch einen bestimmten Zeichen-Substring oder mehrere Zeichen-Substrings in dem übereinzustimmenden Zielzeichenstring erfüllt wird;
Ausführen (130) von logischem Matching hinsichtlich der logischen Beziehung in dem übereinzustimmenden Zielzeichenstring durch Verwendung des logischen Matching-Felds in dem Mode-Matching-String;
wobei: das Ausführen des logischen Matching hinsichtlich der logischen Beziehung in der übereinzustimmenden Zielzeichenstring durch Verwendung des logischen Matching-Felds umfasst: Ausführen des logischen Matching hinsichtlich der logischen Beziehung in dem übereinzustimmenden Zielzeichenstring durch Ausführen einer logischen Verknüpfung, die dem logischen Matching-Feld entspricht.

2. Verfahren nach Anspruch 1, wobei:
das Ausführen des logischen Matching hinsichtlich der logischen Beziehung in dem übereinzustimmenden Zielzeichenstring durch Ausführen einer logischen Verknüpfung, die dem logischen Matching-Feld entspricht, umfasst:
Aufrufen einer Funktion, die dem logischen Matching-Feld entspricht; Ausführen des logischen Matching hinsichtlich der logischen Beziehung in dem übereinzustimmenden Zielzeichenstring durch Ausführen einer logischen Verknüpfung, die durch die Funktion beschrieben wird, und Zurückliefern eines Matching-Ergebnisses.

3. Verfahren nach Anspruch 1 oder Anspruch 2, wobei die logische Verknüpfung, die dem logischen Matching-Feld entspricht, eine der folgenden Verknüpfungen oder eine Kombination aus mehreren der folgenden Verknüpfungen umfasst: Addieren, Subtrahieren, Multiplizieren, Dividieren, gleich, ungleich, größer, größer gleich, kleiner, kleiner gleich, Zuweisung, logisches ODER, logisches UND, bitweises UND, bitweises ODER, mit Ausnahme von, Negation, exklusives ODER, Linksverschiebung und Rechtsverschiebung.

4. Verfahren nach Anspruch 1 bis Anspruch 2, wobei:
der Mode-Matching-String ferner aufweist: mindestens ein Zeichen-Matching-Feld, das verwendet wird, um einen Zeichenstring übereinzustimmen, und wobei das Verfahren ferner umfasst: Ausführen von Zeichen-Matching hinsichtlich des übereinzustimmenden Zielzeichenstring durch Verwendung des Zeichen-Matching-Felds in dem Mode-Matching-String, wobei das logische Matching-Feld und das Zeichen-Matching-Feld verwendet werden, um den Zielzeichenstring basierend auf der Abfolge der logischen Matching-Felder und Zeichen-Matching-Felder übereinzustimmen, oder wobei die logischen Matching-Felder und Zeichen-Matching-Felder gleichzeitig verwendet werden, um den Zielzeichenstring übereinzustimmen.

5. Verfahren nach Anspruch 1, wobei der Mode-Matching-String ferner mindestens ein Zeichen-Matching-Feld aufweist, das verwendet wird, um einen Zeichenstring übereinzustimmen, und wobei das Verfahren ferner umfasst:
Bestimmen, ob das Zeichen-Matching-Feld oder logische Matching-Feld in dem Mode-Matching-String derzeit verwendet wird, um Matching auszuführen;
wenn bestimmt wird, dass das Zeichen-Matching-Feld in dem Mode-Matching-String derzeit verwendet wird, um Matching auszuführen, Auslösen einer Zeichen-Matching-Verknüpfung, die dem Zeichen-Matching-Feld entspricht, um Matching hinsichtlich eines Zeichen-Substring an einer entsprechenden Position in dem übereinzustimmenden Zielzeichenstring auszuführen; und
wenn bestimmt wird, dass das logische Matching-Feld in dem Mode-Matching-String derzeit verwendet wird, um Matching auszuführen, Auslösen einer logischen Matching-Verknüpfung, die dem logischen Matching-Feld entspricht, um Matching hinsichtlich der logischen Beziehung in dem übereinzustimmenden Zielzeichenstring auszuführen.

6. Verfahren nach Anspruch 5, wobei:
das Auslösen einer logischen Matching-Verknüpfung, die dem logischen Matching-Feld entspricht, um Matching hinsichtlich der logischen Beziehung in dem übereinzustimmenden Zielzeichenstring auszuführen, umfasst:
Ausführen des Matching hinsichtlich der logischen Beziehung in dem übereinzustimmenden Zielzeichenstring durch Ausführen einer logischen Verknüpfung, die dem logischen Matching-Feld entspricht.

7. Verfahren nach Anspruch 6, wobei die logische Verknüpfung, die dem logischen Matching-Feld entspricht, eine der folgenden Verknüpfungen oder eine Kombination aus mehreren der folgenden Verknüpfungen umfasst: Addieren, Subtrahieren, Multiplizieren, Dividieren, gleich, ungleich, größer, größer gleich, kleiner, kleiner gleich, Zuweisung, logisches ODER, logisches UND, bitweises UND, bitweises ODER, mit Ausnahme von, Negation, exklusives ODER, Linksverschiebung und Rechtsverschiebung.

8. Verfahren nach einem beliebigen der Ansprüche 5 bis 7, wobei das Zeichen-Matching-Feld ein regulärer Ausdruck oder ein Zeichenstring ist.

9. Vorrichtung zum Mode-Matching, die verwendet wird, um verschiedene charakteristische Wörter aus Paketen in verschiedenen Formaten zu identifizieren, wobei die Vorrichtung dazu angewandt wird, Deep Packet Inspection (DPI) zu implementieren, aufweisend:
ein erstes Lesemodul (610), das dazu ausgebildet ist, einen Mode-Matching-String zu lesen, wobei der Mode-Matching-String mindestens ein logisches Matching-Feld aufweist, das dazu verwendet wird, eine logische Beziehung übereinzustimmen;
ein zweites Lesemodul (630), das dazu ausgebildet ist, einen übereinzustimmenden Zielzeichenstring zu lesen, wobei der übereinzustimmende Zielzeichenstring eine logische Beziehung aufweist, wobei der übereinzustimmende Zielzeichenstring aus Empfangsdatenpaketen ausgelesen wird und wobei die logische Beziehung eine spezifische logische Beziehung ist, die durch einen bestimmten Zeichen-Substring oder mehrere Zeichen-Substrings in dem übereinzustimmenden Zielzeichenstring erfüllt wird;
ein logisches Matching-Modul (620), das dazu ausgebildet ist, durch Verwendung des logischen Matching-Felds Matching hinsichtlich der logischen Beziehung in dem Zielzeichenstring, der durch das zweite Lesemodul gelesen wird, auszuführen;
wobei das logische Matching-Modul spezifisch dazu ausgebildet ist, durch Ausführen einer logischen Verknüpfung, die dem logischen Matching-Feld entspricht, das Matching hinsichtlich der logischen Beziehung in dem übereinzustimmenden Zielzeichenstring auszuführen.

10. Vorrichtung nach Anspruch 9, wobei
der Mode-Matching-String, der durch das erste Lesemodul gelesen wird, ferner mindestens ein Zeichen-Matching-Feld aufweist, das verwendet wird, um einen Zeichenstring übereinzustimmen, und die Mode-Matching-Vorrichtung ferner ein Zeichen-Matching-Modul aufweist;
das Zeichen-Matching-Modul dazu ausgebildet ist, durch Verwendung des Zeichen-Matching-Felds in dem Mode-Matching-String Zeichen-Matching hinsichtlich des übereinzustimmenden Zielzeichenstring auszuführen, wobei das Matching hinsichtlich des übereinzustimmenden Zielzeichenstring gemäß einer Abfolge der logischen Matching-Felder und Zeichen-Matching-Felder in dem Mode-Matching-String ausgeführt wird; oder logisches Matching und Zeichen-Matching durch Verwendung der logischen Matching-Felder und Zeichen-Matching-Felder in dem Mode-Matching-String gleichzeitig ausgeführt werden, um das Matching hinsichtlich des übereinzustimmenden Zielzeichenstring auszuführen.

11. Vorrichtung nach Anspruch 9, wobei
das logische Matching-Modul aufweist:
einen Syntax-Resolver, der dazu ausgebildet ist, Syntax des logischen Matching-Felds in dem Mode-Matching-String, der von dem ersten Lesemodul gelesen wird, aufzulösen;
einen Verfahrensstapelbehälter (Method Stack Container), der dazu ausgebildet ist, eine Einsprungadresse einer Funktion zu speichern, die jedem logischen Matching-Feld entspricht, das in dem Mode-Matching-String ist und durch den Syntax-Resolver aufgelöst wird;
einen atomaren Funktionsbibliotheksbehälter (Atomic Function Library Container), der dazu ausgebildet ist, eine Funktionsaufrufgruppe zu speichern, welche die Funktion beinhaltet;
ein logisches Matching-Verteilungsmodul, das dazu ausgebildet ist, während eines Vorgangs des Ausführens von logischem Matching, das dem logischen Matching-Feld in dem Mode-Matching-String entspricht, eine entsprechende Funktion in der Funktionsaufrufgruppe, die durch den atomaren Funktionsbibliotheksbehälter gespeichert ist, aufzurufen, um Matching hinsichtlich der logischen Beziehung in dem übereinzustimmenden Zielzeichenstring, der durch das zweite Lesemodul gelesen wird, gemäß der Einsprungsadresse der Funktion auszuführen, die dem logischen Matching-Feld entspricht, das in dem Verfahrensstapelbehälter gespeichert ist.

12. Vorrichtung nach Anspruch 11, ferner aufweisend:
einen Variablenstapelbehälter (Variable Stack Container), der dazu ausgebildet ist, eine Variable zu speichern, die während eines Vorgangs des Ausführens der logischen Verknüpfung eingebunden wird, die dem logischen Matching-Feld in dem Mode-Matching-String, der durch das erste Lesemodul gelesen wird, entspricht.

13. Vorrichtung nach Anspruch 10, wobei die Vorrichtung ferner aufweist:
ein Typbestimmungsmodul, das dazu ausgebildet ist, zu bestimmen, ob das Zeichen-Matching-Feld oder das logische Matching-Feld in dem Mode-Matching-String derzeit verwendet wird, um Matching auszuführen;
ein Zeichen-Matching-Modul, das dazu ausgebildet ist: wenn das Typbestimmungsmodul bestimmt, dass das Zeichen-Matching-Feld in dem Mode-Matching-String derzeit verwendet wird, um Matching auszuführen, einen Zeichen-Matching-Vorgang auszulösen, der dem Zeichen-Matching-Feld entspricht, um Matching hinsichtlich eines Zeichen-Substrings an einer entsprechenden Position in dem übereinzustimmenden Zielzeichenstring auszuführen;
ein logisches Matching-Modul, das dazu ausgebildet ist: wenn das Typbestimmungsmodul bestimmt, dass das logische Matching-Feld in dem Mode-Matching-String derzeit verwendet wird, um Matching auszuführen, einen logischen Matching-Vorgang auszulösen, der dem logischen Matching-Feld entspricht, um Matching hinsichtlich der logischen Beziehung in dem übereinzustimmenden Zielzeichenstring auszuführen.

14. Vorrichtung nach Anspruch 13, wobei
ein logisches Matching-Modul dazu ausgebildet ist: wenn das Typbestimmungsmodul bestimmt, dass das Zeichen-Matching-Feld in dem Mode-Matching-String derzeit verwendet wird, um Matching auszuführen, das Matching hinsichtlich der logischen Beziehung in dem übereinzustimmenden Zielzeichenstring durch Ausführen einer logischen Verknüpfung, die dem logischen Matching-Feld entspricht, auszuführen.

15. Vorrichtung nach Anspruch 13, wobei
das logische Matching-Modul aufweist:
den Syntax-Resolver, der dazu ausgebildet ist, Syntax einer logischen Matching-Einheit in dem Mode-Matching-String, der von dem ersten Lesemodul gelesen wird, aufzulösen;
einen Verfahrensstapelbehälter, der dazu ausgebildet ist, eine Einsprungadresse einer Funktion zu speichern, die jedem logischen Matching-Feld entspricht, das in dem Mode-Matching-String ist und durch den Syntax-Resolver aufgelöst wird.
einen atomaren Funktionsbibliotheksbehälter, der dazu ausgebildet ist, eine Funktionsaufrufgruppe zu speichern, welche die Funktion beinhaltet;
ein logisches Matching-Verteilungsmodul, das dazu ausgebildet ist, während eines Vorgangs des Ausführens von logischem Matching, das dem logischen Matching-Feld in dem Mode-Matching-String entspricht, eine entsprechende Funktion in der Funktionsaufrufgruppe aufzurufen, die durch den atomaren Funktionsbibliotheksbehälter gespeichert ist, um Matching hinsichtlich der logischen Beziehung in dem übereinzustimmenden Zielzeichenstring, der durch das zweite Lesemodul gelesen wird, gemäß der Einsprungsadresse der Funktion auszuführen, die dem logischen Matching-Feld entspricht, das in dem Verfahrensstapelbehälter gespeichert ist.

16. Vorrichtung nach Anspruch 15, ferner aufweisend:
einen Variablenstapelbehälter, der dazu ausgebildet ist, eine Variable zu speichern, die während eines Vorgangs des Ausführens einer logischen Verknüpfung eingebunden wird, die dem logischen Matching-Feld in dem Mode-Matching-String, der durch das erste Lesemodul gelesen wird, entspricht.

## Revendications

1. Procédé de mise en correspondance de modes qui est utilisé pour identifier des mots de caractéristiques diverses à partir de paquets dans divers formats, le procédé étant appliqué pour mettre en oeuvre une inspection approfondie des paquets, DPI, comprenant :
la lecture (120) d'une chaîne de correspondances de modes, la chaîne de correspondances de modes comprenant au moins un champ de correspondance logique qui est utilisé pour faire correspondre une relation logique,
la lecture (120) d'une chaîne de caractères cibles à faire correspondre, la chaîne de caractères cibles à faire correspondre étant lue à partir de paquets de données reçus,
le procédé étant **caractérisé en ce que** la chaîne de caractères cibles à faire correspondre comprend une relation logique, et la relation logique représente une relation logique spécifique qui est satisfaite par une certaine sous chaîne de caractères ou par de multiples sous chaînes de caractères dans la chaîne cible de caractères à faire correspondre,
l'exécution (130), en utilisant le champ de correspondance logique dans la chaîne de correspondances de modes, d'une mise en correspondance logique sur la relation logique dans la chaîne de caractères cibles à faire correspondre,
où l'exécution, en utilisant le champ de correspondance logique, de la mise en correspondance logique sur la relation logique dans la chaîne de caractères cibles à faire correspondre comprend : l'exécution, en effectuant une opération logique qui correspond au champ de correspondance logique, de la mise en correspondance logique sur la relation logique dans la chaîne de caractères cibles à faire correspondre.

2. Procédé selon la revendication 1, dans lequel :
l'exécution, en effectuant une opération logique qui correspond au champ de correspondances logique, de la correspondance logique sur la relation logique dans la chaîne de caractères cibles à faire correspondre comprend :
l'appel à une fonction qui correspond au champ de correspondance logique; l'exécution, en effectuant une opération logique qui est décrite par la fonction, de la correspondance logique sur la relation logique dans la chaîne de caractères cibles à faire correspondre, et le renvoi d'un résultat de correspondances.

3. Procédé selon la revendication 1 ou la revendication 2, dans lequel l'opération logique qui correspond au champ de correspondance logique comprend l'une des opérations suivantes ou une combinaison de plusieurs des opérations suivantes : l'addition, la soustraction, la multiplication, la division, l'égalité, l'inégalité, l'opération supérieur à, supérieur ou égal à, inférieur à, inférieur ou égal à, l'affectation, l'opération logique OU, l'opération logique ET, l'opération ET sur les bits, l'opération OU sur les bits, l'opération différent de, la négation, l'opération logique OU exclusif, le décalage à gauche et le décalage à droite.

4. Procédé selon les revendications 1 à 2, dans lequel :
la chaîne de correspondances de modes comprend en outre : au moins un champ de correspondance de caractères qui est utilisé pour faire correspondre une chaîne de caractères, et le procédé comprend de plus : l'exécution, en utilisant le champ de correspondance de caractères dans la chaîne de correspondances de modes, de la mise en correspondance de caractères sur la chaîne de caractères cible à faire correspondre, le champ de correspondance logique et le champ de correspondance de caractères étant utilisé pour faire correspondre la chaîne de caractères cibles sur la base de la séquence des champs de correspondances logiques et des champs de correspondances de caractères, ou bien les champs de correspondances logiques et les champs de correspondances de caractères sont utilisés en même temps pour faire correspondre la chaîne de caractères cibles.

5. Procédé selon la revendication 1, dans lequel la chaîne de correspondances de modes comprend en outre au moins un champ de correspondance de caractères qui est utilisé pour faire correspondre une chaîne de caractères, et le procédé comprend en outre :
la détermination de ce que le champ de correspondance de caractères ou le champ de correspondance logique dans la chaîne de correspondances de modes est en cours d'utilisation pour effectuer une correspondance,
s'il est déterminé que le champ de correspondance de caractères dans la chaîne de correspondances de modes est en cours d'utilisation pour effectuer une correspondance, le déclenchement d'une opération de mise en correspondance de caractères qui correspond au champ de correspondance de caractères pour effectuer une correspondance sur une sous chaîne de caractères à une position correspondante dans la chaîne de caractères cibles à faire correspondre, et
s'il est déterminé que le champ de correspondance logique dans la chaîne de correspondances de modes est en cours d'utilisation pour effectuer une correspondance, le déclenchement d'une opération de correspondance logique qui correspond au champ de correspondance logique pour effectuer une correspondance sur la relation logique dans la chaîne de caractères cibles à faire correspondre.

6. Procédé selon la revendication 5, dans lequel :
le déclenchement d'une opération de correspondance logique qui correspond au champ de correspondance logique pour effectuer une correspondance sur la relation logique dans la chaîne de caractères cibles à faire correspondre comprend :
l'exécution, en effectuant une opération logique qui correspond au champ de correspondance logique, de la correspondance sur la relation logique dans la chaîne de caractères cibles à faire correspondre.

7. Procédé selon la revendication 6, dans lequel l'opération logique qui correspond au champ de correspondance logique comprend l'une des opérations suivantes ou une combinaison de plusieurs des opérations suivantes : l'addition, la soustraction, la multiplication, la division, l'égalité, l'inégalité, l'opération supérieur à, supérieur ou égal à, inférieur à, inférieur ou égal à, l'affectation, l'opération logique OU, l'opération logique ET, l'opération ET sur les bits, l'opération OU sur les bits, l'opération différent de, la négation, l'opération logique OU exclusif, le décalage à gauche et le décalage à droite.

8. Procédé selon l'une quelconque des revendications 5 à 7, dans lequel le champ de correspondance de caractères est une expression régulière ou une chaîne de caractères.

9. Appareil de mise en correspondance de modes qui est utilisé pour identifier des mots de caractéristiques diverses à partir de paquets dans divers formats, l'appareil étant appliqué pour mettre en oeuvre une inspection approfondie des paquets, DPI, comprenant :
un premier module de lecture (610) configuré pour lire une chaîne de correspondances de modes, la chaîne de correspondances de modes comprenant au moins un champ de correspondance logique qui est utilisé pour faire correspondre une relation logique,
un second module de lecture (630) configuré pour relier une chaîne de caractères cibles à faire correspondre, la chaîne de caractères cibles à faire correspondre comprenant une relation logique, la chaîne de caractères cibles à faire correspondre étant lue à partir de paquets de données reçus et la relation logique étant une relation logique spécifique qui est satisfaite par une certaine sous chaîne de caractères ou par de multiples sous chaînes de caractères dans la chaîne de caractères cibles à faire correspondre,
un module de mise en correspondance logique (620) configuré pour effectuer, en utilisant le champ de correspondance logique, une correspondance sur la relation logique dans la chaîne de caractères cibles lue par le second module de lecture, dans lequel le module de mise en correspondance logique est en particulier configuré pour exécuter, en effectuant une opération logique qui correspond au champ de correspondance logique, la correspondance sur la relation logique dans la chaîne de caractères cibles à faire correspondre.

10. Appareil selon la revendication 9, dans lequel
la chaîne de correspondances de modes lue par le premier module de lecture comprend en outre au moins un champ de correspondance de caractères qui est utilisé pour faire correspondre une chaîne de caractères, et l'appareil de mise en correspondance de modes comprend en outre un module de mise en correspondance de caractères,
le module de mise en correspondance de caractères est configuré pour exécuter, en utilisant le champ de correspondance de caractères dans la chaîne de correspondances de modes, une correspondance de caractères sur la chaîne de caractères cibles à faire correspondre, la correspondance sur la chaîne de caractères cible à faire correspondre étant effectuée en fonction d'une séquence de champs de correspondances logiques et des champs de correspondances de caractères dans la chaîne de correspondances de modes ; ou bien la correspondance logique et la correspondance de caractères sont effectuées en même temps en utilisant les champs de correspondances logiques et les champs de correspondances de caractères dans la chaîne de correspondances de modes pour effectuer la correspondance sur la chaîne de caractères cibles à faire correspondre.

11. Appareil selon la revendication 9, dans lequel
le module de mise en correspondance logique comprend :
un dispositif de résolution de syntaxe configuré pour résoudre la syntaxe du champ de correspondance logique dans la chaîne de correspondances de modes lue par le premier module de lecture,
un conteneur de piles de procédés configuré pour mémoriser une adresse d'entrée de fonction qui correspond à chaque champ de correspondance logique qui se trouve dans la chaîne de correspondances de modes et qui est résolue par le dispositif de résolution de syntaxe,
un conteneur de bibliothèque de fonctions atomiques configuré pour mémoriser un groupe d'appels à des fonctions qui inclut la fonction,
un module de répartition de correspondances logiques configuré pour appeler, pendant le processus d'exécution d'une correspondance logique qui correspond au champ de correspondance logique dans la chaîne de correspondances de modes, une fonction correspondante dans le groupe d'appels à des fonctions mémorisé par le conteneur de bibliothèque de fonctions atomiques pour effectuer une correspondance sur la relation logique dans la chaîne de caractères cibles à faire correspondre lue par le second module de lecture en fonction de l'adresse d'entrée de la fonction qui correspond au champ de correspondance logique mémorisé dans le conteneur de piles de procédés.

12. Appareil selon la revendication 11, comprenant en outre :
un conteneur de piles de variables configuré pour mémoriser une variable introduite pendant un processus d'exécution de l'opération logique qui correspond au champ de correspondance logique dans la chaîne de correspondances de modes lue par le premier module de lecture.

13. Appareil selon la revendication 10, dans lequel apparaît comprend en outre :
un module de détermination de type configuré pour déterminer si le champ de correspondance de caractères ou le champ de correspondance logique dans la chaîne de correspondances de modes est en cours d'utilisation pour effectuer une correspondance,
un module de mise en correspondance de caractères configuré pour déclencher, si le module de détermination de type définit que le champ de correspondance de caractères dans la chaîne de correspondances de modes est en cours d'utilisation pour effectuer une correspondance, une opération de mise en correspondance de caractères qui correspond au champ de correspondance de caractères pour effectuer une correspondance sur une sous chaîne de caractères à une position correspondante dans le chaîne de caractères cibles à faire correspondre,
un module de mise en correspondance logique configuré pour déclencher, si le module de détermination de type définit que le champ de correspondance logique dans la chaîne de correspondances de modes est en cours d'utilisation pour effectuer une correspondance, une opération de mise en correspondance logique qui correspond au champ de correspondance logique pour effectuer une correspondance sur la relation logique dans la chaîne de caractères cibles à faire correspondre.

14. Appareil selon la revendication 13, dans lequel
un module de mise en correspondance logique est configuré pour exécuter, en effectuant une opération logique qui correspond au champ de correspondance logique, la correspondance sur la relation logique dans la chaîne de caractères cibles à faire correspondre, si le module de détermination de type définit que le champ de correspondance de caractères dans la chaîne de correspondances de modes est en cours d'utilisation pour effectuer une correspondance.

15. Appareil selon la revendication 13, dans lequel
le module de mise en correspondance logique comprend :
le dispositif de résolution de syntaxe configuré pour résoudre la syntaxe d'une unité de mise en correspondance logique dans la chaîne de correspondances de modes lue par le premier module de lecture,
un conteneur de piles de procédés configuré pour mémoriser une adresse d'entrée d'une fonction qui correspond à chaque champ de correspondance logique qui se trouve dans la chaîne de correspondances de modes et qui est résolu par le dispositif de résolution de syntaxe,
un conteneur de bibliothèque de fonctions atomiques configuré pour mémoriser un groupe d'appels à des fonctions qui inclue la fonction,
un module de répartition de correspondances logiques configuré pour appeler, pendant un processus d'exécution d'une correspondance logique qui correspond au champ de correspondance logique dans la chaîne de correspondances de modes, une fonction correspondante dans le groupe d'appels à des fonctions mémorisé par le conteneur de bibliothèque de fonctions atomiques pour effectuer une correspondance sur la relation logique dans la chaîne de caractères cibles à faire correspondre lue par le second module de lecture en fonction de l'adresse d'entrée de la fonction qui correspond au champ de correspondance logique mémorisé dans le conteneur de piles de procédés.

16. Appareil selon la revendication 15, comprenant en outre :
un conteneur de piles de variables configuré pour mémoriser une variable introduite pendant le processus d'exécution de l'opération logique qui correspond au champ de correspondance logique dans la chaîne de correspondances de modes lue par le premier module de lecture.
